# EUROPÄISCHE PATENTSCHRIFT

(11) **EP 0 534 001 B1**
(45) Veröffentlichungstag und Bekanntmachung des Hinweises auf die Patenterteilung: **01.02.1995**
(21) Anmeldenummer: 91121341.1
(22) Anmeldetag: 11.12.1991
(51) Int. Cl.: F16B 1/00, F16B 5/00

(54) **Schraubverbindung zum Verbinden von zwei beabstandeten Bauteilen, insbesondere Blechen**
Screwed connections for connecting two structural members at some distance, in particular sheets
Assemblage à vis pour assembler deux pièces de construction, qui ont vue distance, notamment des plaques de métal

(30) Priorität: 24.09.1991 DE 4131812
(43) Veröffentlichungstag der Anmeldung: 31.03.1993
(73) Patentinhaber: ITW BEFESTIGUNGSSYSTEME GmbH, D-58642 Iserlohn (DE)
(72) Erfinder: Jakob, Andreas, W-4600 Dortmund 16 (DE)
(74) Vertreter: Patentanwälte Hauck, Graalfs, Wehnert, Döring, Siemons

(56) Entgegenhaltungen:
- EP-A- 0 390 751
- AU-D- 7 981 787
- DE-A- 2 106 351
- DE-B- 1 475 131
- DE-C- 3 620 005

## Beschreibung

Die Erfindung bezieht sich auf eine Schraubverbindung von zwei beabstandeten Bauteilen, insbesondere Blechen, nach dem Oberbegriff des Patentanspruchs 1.

Es kommt im Stahlbau oder auch im Automobilbau häufig vor, zwei beabstandete Bauteile durch eine Schraubverbindung fest miteinander zu verbinden. Um zu verhindern, daß durch die Schraubverbindung die Bauteile aufeinander zu verformt werden, wird auf den Schraubenschaft eine Abstandshülse gesetzt, die bei einer Befestigung der Schraube dementsprechend mit ihren Stirnseiten in Anlage gegen die Bauteile gebracht werden. Um eine Verformung Zu vermeiden, müßte der jeweilige genaue Abstand zwischen den Bauteilen bekannt sein. Wenn in der Fertigung jedoch Toleranzen bis in den Millimeter-Bereich hinzunehmen sind, ist es kaum möglich, standardisierte Abstandshülsen zu wählen oder gar eine jeweils passende.

Der Erfindung liegt die Aufgabe zugrunde, eine Schraubverbindung zum Verbinden von zwei beabstandeten Bauteilen, insbesondere Blechen, zu schaffen, mit der Toleranzen im Abstand der Bauteile auf einfache Weise ausgeglichen werden können.

Diese Aufgabe wird gelöst durch die Merkmale des Patentanspruchs 1.

Bei der erfindungsgemäßen Schraubverbindung wird ebenfalls eine Abstandshülse verwendet, diese weist indessen ein Außengewinde auf, mit dem die Abstandshülse in eine Mutter eingeschraubt werden kann, die auf der dem Schraubenkopf gegenüberliegenden Seite des ersten Bauteils angebracht ist. Beispielsweise ist eine derartige Mutter angeschweißt. Die zur Anwendung gelangende Schraube weist nur einen vorderen Gewindeabschnitt auf, dessen Spitzendurchmesser größer ist als der Durchmesser des sich zum Kopf hin erstreckenden gewindelose Schaftabschnitts. Dies ist bei der Herstellung von Schrauben durch spanlose Preßverformung ohne weiteres zu erreichen, Die Abstandshülse weist ferner einen Innengewindeabschnitt auf, der sich über einen Bereich der Hülse erstreckend im montierten Zustand in dem dem Schraubenkopf zugewandten Endbereich der Hülse liegen kann. Der Innendurchmesser oder Kerndurchmesser des Innengewindeabschnitts ist dabei gleich oder etwas größer als der Durchmesser des gewindelösen Schaftabschnitts. Schließlich ist die Abstandshülse vor der Herstellung der Schraubverbindung mit dem Gewindeabschnitt des Schraubenschaftes so gekoppelt, daß bei dem Aufbringen eines Momentes auf die Schraube ein nicht unhebliches Moment auf die Abstandshülse übertragen werden kann. Dieses Moment ist notwendig, um die Abstandshülse in die zweite Mutter einschrauben zu können. Beim Einschrauben in die zweite Mutter bewegt sich die Abstandshülse in Anlage an die Innenseite des zweiten Bauteils. Wird nun die Schraube mit einem Moment weitergedreht, der das Kupplungsmoment zwischen den Gewindeabschnitten von Schraube und Abstandshülse überschreitet, löst sich der Kupplungseingriff und der Gewindeabschnitt der Schraube wird durch den Gewindeabschnitt der Abstandshülse hindurchgeschraubt, bis die Gewindeabschnitte voneinander frei werden. Daraufhin kann der Gewindeabschnitt durch eine entsprechende Bohrung im zweiten Bauteil in die erste Mutter eingeschraubt werden, um die Bauteile mit dem gegebenen individuellen Abstand fest miteinander zu verschrauben.

Wie erkennbar, kann der Abstand zwischen den Bauteilen innerhalb erheblicher Grenzen variieren. Gleichwohl wird der jeweilige Abstand mit Hilfe der Abstandshülse und der Mutter fest eingestellt. Im übrigen versteht sich, daß die Bohrung im ersten Bauteil im Durchmesser ausreichend groß gewählt werden muß, daß sich die Schraube mit der montierten Abstandshülse hindurchstecken läßt. Es ist daher zweckmäßig, zwischen Schraubenkopf und erstem Bauteil eine Unterlegscheibe anzuordnen. Die Schraube kann mit der Abstandshülse und der Unterlegscheibe auf dem gewindelosen Schaft als Einheit vorgefertigt und zum Anwender transportiert werden.

Es versteht sich ferner, daß die Abmessungen der beschriebenen Teile so gewählt sind, daß der Gewindeabschnitt des Schraubenschaftes den Gewindeabschnitt der Abstandshülse verlassen hat, bevor er mit der ersten Mutter in Eingriff tritt.

Die Kupplung zwischen Abstandshülse und Gewindeabschnitt der Schraube kann auf verschiedene Art und Weise hergestellt werden. Eine besonders einfache Lösung besteht erfindungsgemäß darin, daß die Gewindeabschnitte von Abstandshülse und Schraube durch Klebung verbunden sind, vorzugsweise durch Microverkapselung. Zu diesem Zweck wird zunächst der Gewindeabschnitt der Schraube mit dem Zweikomponentenkleber versehen, bevor die Abstandshülse aufgeschraubt wird. Anschließend härtet die äußere Komponente aus und bildet eine Haftverbindung, die 4 bis 6 Nm übertragen kann. Ein derartiges Moment reicht aus, um die Abstandshülse in die zweite Mutter einzuschrauben. Diese ist vorzugsweise gemäß einer weiteren Ausgestaltung der Erfindung an die Innenseite des ersten Bauteils angeschweißt.

Vielfach ist nicht nur ein Längenausgleich erforderlich, sondern auch ein Ausgleich quer zur Schraubenachse. Dieser kann zwar dadurch erhalten werden, daß das Loch im zweiten Bauteil ausreichend groß bemessen ist. Soll jedoch eine plane Anlage aller Teile der Schraubverbindungen gewährleistet sein, reicht diese Maßnahme nicht aus. Nach einer weiteren Ausgestaltung der Erfindung ist daher vorgesehen, daß zwischen der zweiten Mutter und dem zweiten Bauteil ein ringförmiges Element angeordnet ist, dessen Durchbohrung einen Bohrungsabschnitt mit einem Durchmesser aufweist, der geringfügig größer ist als der Außendurchmesser des vorderen Gewindeabschnitts auf dem Schraubenschaft und einen sich in Richtung zweiter Mutter erstreckenden konischen Abschnitt aufweist, daß das Loch im zweiten Bauteil größer ist als der Durchmesser des Schraubenschaftes bzw. seines Gewindeabschnitts und daß der Gewindeabschnitt der Schraube so weit aus der Außenhülse vorsteht und das ringförmige Element so bemessen ist, daß das vordere Ende des Gewindeabschnitts den Bohrungsabschnitt des ringförmigen Elements erreicht, bevor die Abstandshülse an dem ringförmigen Element zur Anlage kommt. Das ringförmige Element wird durch den Gewindeabschnitt der Schraube ausgerichtet und dabei plan gegen die Innenseite des zweiten Bauteils angelegt. Anschließend kann die Abstandshülse mit der anderen Stirnseite des ringförmigen Elements zusammenwirken und ebenfalls zur Planen Anlage gelangen. Auf diese Weise wird mit der erfindungsgemäßen Schraubverbindung auch ein seitliches Spiel ausgeglichen bei gleichzeitig planer Anlage der miteinander verbundenen Teile.

Für die Montage ist es ein Vorteil, wenn nach einer Ausgestaltung der Erfindung das ringförmige Element schwimmend an der zugeordneten Seite des zweiten Bauteils anbringbar ist, beispielsweise mit Hilfe eines Clips oder dergleichen, der in mindestens einem weiten Loch des zweiten Bauteils verriegelt werden kann. Besonders vorteilhaft ist, wenn der Clip gleichzeitig mit der ersten Mutter zusammenwirkt und diese ebenfalls schwimmend gelagert am zweiten Bauteil hält. Der Clip kann nach einer weiteren Ausgestaltung der Erfindung mindestens zwei vorzugsweise diametral gegenüberliegende Federbeine aufweisen, die in geeigneter Weise am ringförmigen Element angebracht sind. Ein federnder Hinterschnitt durchgreift Löcher des zweiten Bauteils und der ersten Mutter, um diese Teile in verriegelter Stellung zu halten. Der Clip kann aus Blechmaterial oder Kunststoff gefertigt sein. Im letzteren Fall wird er vorzugsweise an das ringförmige Element angespritzt. Besteht er aus Blechmaterial, wird er vorzugsweise reibend auf den Umfang das ringförmigen Elements aufgepreßt.

Die Erfindung wird nachfolgend anhand von Zeichnungen näher erläutert.
- Fig. 1: zeigt einen Schnitt durch eine Schraubverbindung nach der Erfindung.
- Fig. 2: zeigt eine Schraube der Schraubverbindung nach Fig. 1.
- Fig. 3: zeigt eine Abstandshülse der Schraubverbindung nach Fig 1.
- Fig. 4: zeigt den Zusammenbau von Schraube und Abstandshülse.
- Fig. 5: zeigt einen Schnitt durch eine zweite Ausführungsform einer Schraubverbindung nach der Erfindung.
- Fig. 6: zeigt eine Stirnansicht der ersten Mutter der Schraubverbindung nach Fig. 5 in Richtung Pfeil 6.
- Fig. 7: zeigt einen Ausschnitt auf die Ansicht des zweiten Bauteils der Schraubverbindung nach Fig. 5, ebenfalls in Richtung Pfeil 6.
- Fig. 8: zeigt einen Schnitt durch das ringförmige Element der Schraubverbindung nach Fig. 5.
- Fig. 9: zeigt eine Seitenansicht des ringförmigen Elements nach Fig. 8 in Richtung Pfeil 9.

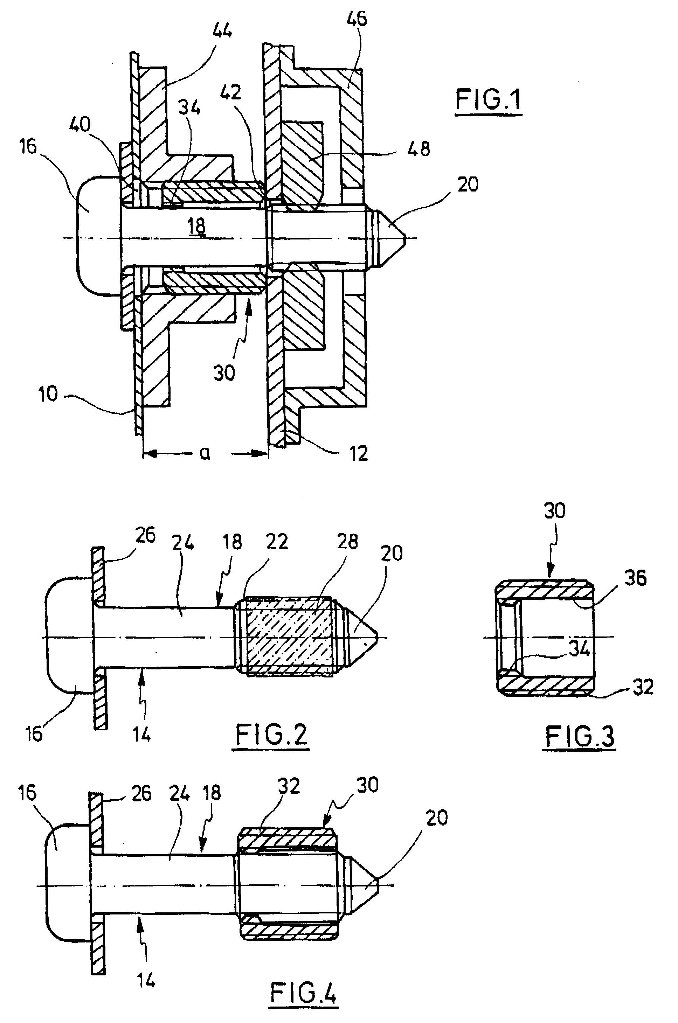

In Fig. 1 sind zwei Blechteile 10, 12 dargestellt, die parallel zueinander verlaufen und mit Hilfe einer Schraubverbindung fest miteinander im vorgegebenem Abstand a verbunden werden sollen. In den Figuren 2 bis 4 sind Teile der Schraubverbindung im einzelnen dargestellt.

Fig. 2 zeigt eine Schraube 14 mit einem Kopf 16 und einem Schaft 18. Der Schaft 18 weist am freien Ende eine Einschraubspitze 20 auf, an der sich in Richtung Kopf ein Gewindeabschnitt 22 anschließt. Zwischen dem Kopf 16 und dem Gewindeabschnitt 22 ist ein gewindeloser Schaftabschnitt 24 geformt. Der Gewindeabschnitt 22 ist spanlos durch Rollverformung hergestellt, und sein Spitzendurchmesser ist dementsprechend größer als der Durchmesser des gewindelosen Schaftabschnitt 24. Der Flankendurchmesser des Gewindeabschnitts 22 entspricht annähernd dem Durchmesser des Schaftabschnitts 24. Auf dem gewindelosen Schaftabschnitt 24 ist eine Unterlegscheibe 26 angeordnet, die vor der Herstellung des Gewindeabschnitts 22 aufgeschoben ist.

Auf den Gewindeabschnitt 22 ist eine sogenannte Microverkapselung 28 aufgebracht, eine aus Zweikomponentenschichten bestehende Klebeschicht, von denen die äußere erst aktiv wird, wenn sie mechanisch aktiviert wird.

Eine Abstandshülse 30 gemäß Fig. 3 weist ein Außengewinde 32 auf sowie einen Innengewindeabschnitt 34, dessen Kern- bzw. Innendurchmesser kleiner ist als der Durchmesser der gewindelosen Bohrung 36 der Hülse 30 und größer als der Durchmesser des gewindelosen Schaftabschnitts 24. Ferner ist der Durchmesser der Bohrung 36 etwas größer als der Spitzendurchmesser des Gewindeabschnitts 22.

Nach Fertigung von Schraube 14 und Abstandshülse 30 wird die Abstandshülse 30 auf den Gewindeabschnitt 22 aufgeschraubt, wobei die Microverkapselung nach einer Aushärtezeit von etwa 6 bis 8 Stunden eine Verbindung zwischen Schraube und Abstandshülse herstellt. Vor der Formung des Gewindeabschnitts 22 wird die Unterlegscheibe 26 auf den Schaft 18 aufgesetzt.

Das erste Bauteil 10 hat eine Bohrung 40 und das zweite Bauteil 12 eine Bohrung 42, welche Bohrungen zueinander ausgerichtet sind. Auf der Rückseite des ersten Bauteils 10 ist eine geflanschte Schweißmutter 44 aufgeschweißt. Auf der Außenseite des zweiten Bauteils 12 ist in herkömmlicher Weise ein Käfig 46 angebracht, beispielsweise durch Schweißung, in dem lose eine Mutter 48 angeordnet ist.

Zur Herstellung der Schraubverbindung wird die Einheit gemäß Fig. 4 durch die Bohrung 40 eingeführt, und die Abstandshülse 30 wird in die Mutter 44 eingedreht. Die Abstandshülse 30 wird soweit vorbewegt, bis sie gegen die Innenseite des zweiten Bauteils 12 zur Anlage gelangt. Soll die Schraube 14 weitergedreht werden, ist ein Moment aufzubringen, das über dem Moment der Klebverbindung liegt, beispielsweise oberhalb von 5 bis 6 Nm. Dadurch löst sich die Verklebung und der Gewindeabschnitt 22 wird durch den Gewindeabschnitt 34 hindurchgeschraubt, bis die Gewindeabschnitte voneinander freikommen. Danach kann mit Hilfe der Spitze 20 die Mutter 48 zentriert werden, so daß der Gewindeabschnitt 22 nunmehr in die Mutter 48 eingeschraubt werden kann, um eine feste Schraubverbindung herzustellen.

Die Klebeschicht auf dem Gewindeabschnitt 22 kann dann dazu dienen, eine Sicherung in der Mutter 48 zu bewirken.

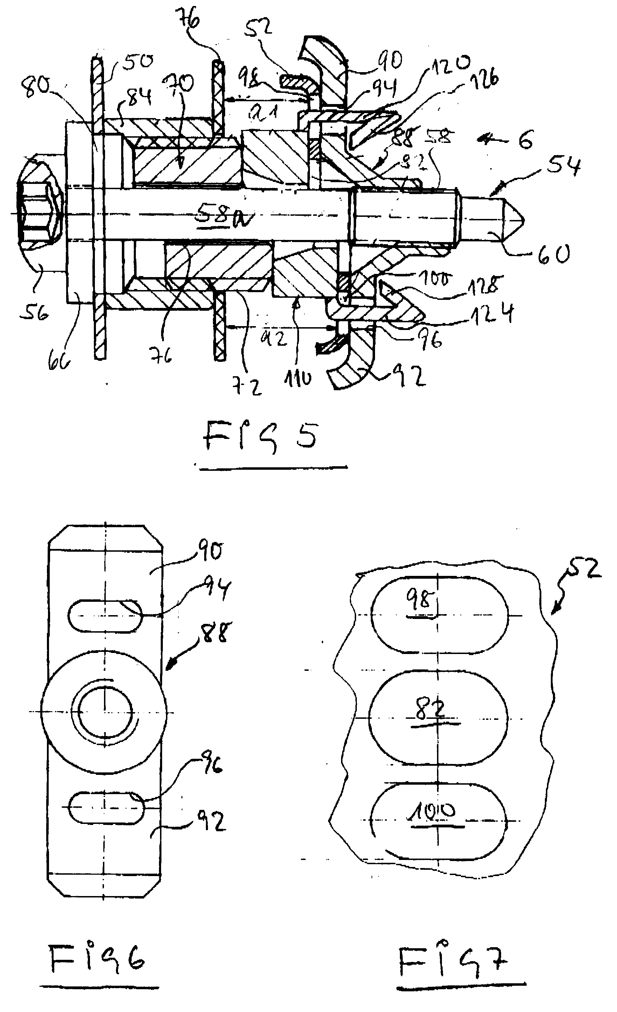

Bei der Ausführungsform nach Fig. 5 sollen ein erstes Bauteil 50 und ein zweites Bauteil 52 miteinander verbunden werden. Zu diesem Zweck ist eine Schraube 54 vorgesehen mit einem Kopf 56 auf der Außenseite des ersten Bauteils 50, das aus Blech gebildet ist, ebenso wie das zweite Bauteil 52. Der dem Kopf 56 nächstgelegene Schaftabschnitt 58a der Schraube 10 ist gewindelos. Diesem schließt sich ein Gewindeabschnitt 58 an und an diesen eine längere Spitze 60. Eine Öffnung 80 im ersten Bauteil 50 ist im Durchmesser größer als der Schraubenkopf 56, so daß eine Unterlegscheibe 66 vorgesehen ist. Auf dem Schraubenschaftabschnitt 58 ist eine Abstandshülse 70 angeordnet, die ein durchgehendes Innengewinde 76 und ein Außengewinde 72 aufweist. Die Abstandshülse 70 ist in das Innengewinde einer zweiten Mutter 84 eingeschraubt, die zwischen dem ersten Bauteil 50 und einem dritten Bauteil 76 fest angeordnet ist, beispielsweise durch Verschweißung.

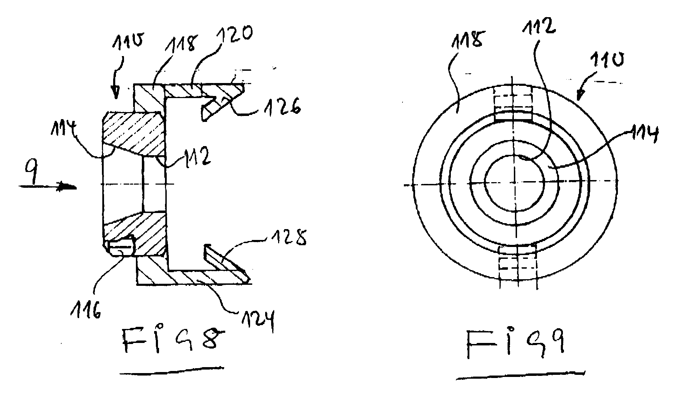

Wie aus den Figuren 5 und 6 hervorgeht, weist die erste Mutter 88, die als Blechmutter geformt ist, zwei diametral gegenüberliegende Ansätze 90, 92 auf, die Langlöcher 94, 96 aufweisen. Die Langlöcher 94, 96 sind annähernd zu Löchern 98, 100 im zweiten Bauteil ausgerichtet, das ein mittleres Loch 82 aufweist. Die Lochanordnung im zweiten Bauteil 52 ist in Fig. 7 zu erkennen. Die Löcher 82, 98 und 100 haben annähernd ovale Form, wobei sich die Großachse in Querrichtung erstreckt ebenso wie bei den Langlöchern 94, 96 der Mutter 88. Die Maße der mittleren Öffnung 82 sind derart, daß der Schaftabschnitt 58a im Toleranzbereich der zu verbindenden Bauteile hindurchgeführt werden kann.

Zwischen der Abstandshülse 70 und dem zweiten Bauteil 52 ist ein ringförmiges Bauteil 110 angeordnet, das anhand der Figuren 8 und 9 näher beschrieben wird. Es weist einen zylindrischen Bohrungsabschnitt 112 auf, der in einen konischen Abschnitt 114 übergeht. Der Durchmesser des Bohrungsabschnitts 112 ist derart gewählt, daß er geringfügig größer ist als der Spitzendurchmesser des Gewindeabschnitts 58 der Schraube 54. Wie bei 116 angedeutet, ist das ringförmige Bauteil 110 an der Außenseite mit achsparallelen Längsriefen versehen. Auf den Umfang des Elements 110 ist ein Blechring 118 aufgepreßt, an den achsparallel abstehend diametral Federbeine 120, 124 geformt sind. Das freie Ende der Federbeine 120, 124 ist widerhakenartig zurückverformt, wie bei 126 bzw. 128 dargestellt.

Aus Fig. 5 ist zu erkennen, daß sich die Federbeine 120, 124 durch die Löcher 98, 100 des zweiten Bauteils 52 hindurcherstrecken sowie durch die Löcher 94, 96 der Mutter 88, um das ringförmige Bauteil 110 und die Mutter 88 zusammen im zweiten Bauteil 52 zu halten. Die Außenabmessungen des ringförmigen Bauteils 110 sind derart, daß es die Öffnung 82 in jeder Einbaulage überdeckt. Bei Herstellung der Schraubverbindung sitzt, wie dies in Verbindung mit den Figuren 1 bis 4 beschrieben wurde, die Abstandshülse 20 auf dem Gewindeabschnitt 58 der Schraube 54 und wird in die Mutter 84 eingeschraubt. Die Spitze 60 der Schraube taucht in den konischen Abschnitt 114 des ringförmigen Elements 110 und anschließend in den Bohrungsabschnitt 112. Dabei sind die Abmessungen so gewählt, daß das vordere Ende des Gewindeabschnitts 58 den Bohrungsabschnitt 112 erreicht, bevor die Abstandshülse 70 mit dem ringförmigen Element 110 zur planen Anlage gelangt, damit eine gesamte plane Anlage aller Verbindungsbauteile erhalten wird. Anschließend wird der Gewindeabschnitt 58 mit einem höheren Moment aus dar Abstandshülse 70 herausgedreht, um mit dem Gewinde der Mutter 88 in Eingriff zu gelangen und die Teile fest zu verspannen.

In Fig. 5 ist zu erkennen, daß in der oberen und in der unteren Hälfte das Bauteil 52 jeweils einen unterschiedlichen Abstand zum ersten Bauteil 50 aufweist. Im ersten Fall entspricht der Abstand zwischen dem Bauteil 76 und dem Bauteil 52 der Entfernung a1 und im zweiten Fall der Entfernung a2. Die Differenz zwischen a2 und a1 bestimmt den axialen Toleranzausgleich der gezeigten Schraubverbindung.

## Patentansprüche

1. Schraubverbindung von zwei beabstandeten Bauteilen, insbesondere Blechen, mit einer Schraube, deren Kopf an der Außenseite des einen Bauteile anliegt, einer ersten Mutter, die an dar Außenseite das zweiten Bauteils zur Anlage kommt und einer Abstandshülse auf dem Schaft der Schraube zwischen den Bauteilen, dadurch gekennzeichnet, daß die Abstandshülse (30) ein Außengewinde (32) aufweist und in eine zweite Mutter (44) einschraubbar ist, die auf der dem Schraubenkopf (16) gegenüberliegenden Seite des ersten Bauteile (10) angebracht ist, die Schraube (14) einen vorderen Gewindeabschnitt (22) aufweist, dessen Spitzendurchmesser größer ist als der Durchmesser des sich zum Kopf (16) hin erstreckenden gewindelosen Schaftabschnitts (24), die Abstandshülse (30) einen Innengewindeabschnitt (34) aufweist, dessen Innen- oder Kerndurchmesser gleich oder größer ist als der Durchmesser des gewindelosen Schaftabschnitts, der Gewindeabschnitt (34) der Abstandshülse vor dem Einschraubvorgang mit dem Gewindeabschnitt (22) der Schraube (14) so in kraftschlüssigem Eingriff ist, daß die Abstandshülse (30) mit einem ausreichenden Moment in die zweite Mutter (44) eingeschraubt werden kann, daß dieser Eingriff sich indessen bei Anschlag der Abstands ülse (30) an dem zweiten Bauteil und bei einem höheren Drehmoment löst, damit der Gewindeschaftabschnitt (22) in die erste Mutter (48) eingeschraubt werden kann.

2. Schraubverbindung nach Anspruch 1, dadurch gekennzeichnet, daß die Gewindeabschnitte (34, 22) von Abstandshülse (30) und Schraube (14) durch Klebung verbunden sind, vorzugsweise durch Mircoverkapselung (28).

3. Schraubverbindung nach Anspruch 1 oder 2, dadurch gekennzeichnet, daß die zweite Mutter (44) an die Innenseite des ersten Bauteils (10) geschweißt ist.

4. Schraubverbindung nach einem der Ansprüche 1 bis 3, dadurch gekennzeichnet, daß die erste Mutter (48) in einem Käfig (46) angeordnet ist.

5. Schraubverbindung nach einem der Ansprüche 1 bis 4, dadurch gekennzeichnet, daß die Schraube (14) mit der Abstandshülse (30) und einer Unterlegscheibe (26) auf dem gewindelosen Schaftabschnitt (24) als Einheit vorgefertigt ist.

6. Schraubverbindung nach einem der Ansprüche 1 bis 6, dadurch gekennzeichnet, daß zwischen der zweiten Mutter (84) und dem zweiten Bauteil (52) ein ringförmiges Element (110) angeordnet ist, dessen Durchbohrung einen Bohrungsabschnitt (112) mit einem Durchmesser aufweist, der geringfügig größer ist als der Außendurchmesser des vorderen Gewindeabschnitts (58) der Schraube (54) und einen sich in Richtung zweiter Mutter (84) erweiternden konischen Abschnitt (114) aufweist, daß das Loch (82) im zweiten Bauteil (52) größer ist als der Durchmesser des Schraubenschaftes bzw. seines Gewindeabschnitts (58) und daß der Gewindeabschnitt (58) der Schraube (54) so weit aus der Abstandshülse (70) vorsteht und das ringförmige Element (110) so bemessen ist, daß das vordere Ende des Gewindeabschnitts (58) den Bohrungsabschnitt (112) des ringförmigen Elements (110) erreicht, bevor die Abstandshülse (70) an dem ringförmigen Element (110) zur Anlage kommt.

7. Schraubverbindung nach Anspruch 6, dadurch gekennzeichnet, daß das ringförmige Element (110) schwimmend an der zugewandten Seite des zweiten Bauteile (52) anbringbar ist.

8. Schraubverbindung nach Anspruch 7, dadurch gekennzeichnet, daß am ringförmigen Element (110) ein Clip (118, 120, 124) oder dergleichen vorgesehen ist, der mindestens in einem weiteren Loch (98, 100) des zweiten Bauteils (52) verriegelt werden kann.

9. Schraubverbindung nach Anspruch 8, dadurch gekennzeichnet, daß mindestens zwei vorzugsweise diametral gegenüberliegende Federbeine (120, 124) am ringförmigen Element (110) angebracht sind, von denen ein vorderes mit einem federelastischen Hinterschnitt (126, 128) versehenes Teil durch entsprechende Löcher (98, 100) des zweiten Bauteile (52) hindurchführbar sind, so daß der Hinterschnitt an der anderen Seite des zweiten Bauteils (52) zur Anlage kommt, wenn der federnde Hinterschnitt (126, 128) durch das entsprechende Loch hindurchgesteckt worden ist.

10. Schraubverbindung nach Anspruch 8 oder 9, dadurch gekennzeichnet, daß der Clip gleichzeitig in mindestens eine Öffnung (94, 96) der ersten Mutter (88) eingreift, um diese am zweiten Bauteil (52) zu halten.

11. Schraubverbindung nach den Ansprüchen 8 bis 10, dadurch gekennzeichnet, daß der Clip aus Blechmaterial oder Kunststoff geformt ist.

12. Schraubverbindung nach Anspruch 11, dadurch gekennzeichnet, daß der Clip aus Kunststoff an dem ringförmigen Element (110) angespritzt ist.

13. Schraubverbindung nach einem der Ansprüche 8 bis 10, dadurch gekennzeichnet, daß der Clip aus Blechmaterial reibend auf dem Umfang des ringförmigen Elements gehalten ist.

14. Schraubverbindung nach Anspruch 13, dadurch gekennzeichnet, daß der Umfang des ringförmigen Elements (110) mit einer achsparallelen Riffelung (116) versehen ist.

15. Schraubverbindung nach einem der Ansprüche 10 bis 14, dadurch gekennzeichnet, daß die erste Mutter (88) zwei diametral gegenüberliegende Ansätze (90, 92) aufweist, in welchen jeweils ein Loch (94, 98) geformt ist.

## Claims

1. A screw fastener device for connecting two spaced apart structural members, in particular sheet metal plates, comprising a screw having a head resting on the outer side of the one structural member, a first nut resting on the outer side of the second structural member and a spacer sleeve placed on the shaft of the screw between said structural members, characterized in that the spacer sleeve (30) comprises an outer thread (32) to be screwed into a second nut (44) which is attached to the side of the first member opposite the screw head (16), that the screw (14) comprises a forward threaded portion (22) having a peak diameter which is larger than the diameter of the threadless shaft portion (24) extending towards the head (16), that the spacer sleeve (30) comprises an inner threaded portion which inner or core diameter is equal or larger than the diameter of the threadless shaft portion, that the threaded portion (34) of the spacer sleeve is positively engaged by the threaded portion (22) of the screw (14) before being screwed in so that the spacer sleeve (30) may be screwed into the second nut (44) by exercising an appropriate torque, that the said positive engagement becomes free when the spacer sleeve (30) comes to a rest on the second member and by exercising a higher torque so that the threaded shaft portion (22) may be screwed into the first nut (48).

2. The screw fastener device of claim 1, characterized in that the threaded portions (34,22) of the spacer sleeve (30) and the screw (14) are connected by an adhesive, preferably by a micro seal (28).

3. The screw fastener device of claim 1 or 2, characterized in that the second nut (44) is welded to the inner side of the first member (10).

4. The screw fastener device of one of claims 1 to 3, characterized in that the first nut (48) is placed in a cage (46).

5. The screw fastener device of one of claims 1 to 4, characterized in that the screw (14) together with the spacer sleeve (30) and a washer (26) on the threadless shaft portion (24) are prefabricated as a unit.

6. The screw fastener device of one of claims 1 to 6, characterized in that an annular member (110) is placed between the second nut (84) and the second member (52), said annular member having a through-bore including a bore section (112) having a diameter which is slightly larger than the outer diameter of the forward threaded portion (58) of the screw (54) and having a tapered section (124) increasing towards the direction of the second nut (84), that the bore (82) in the second member (52) is larger than the diameter of the head shaft or, respectively, of its threaded portion (58) and that the distance by which the threaded portion (58) of the screw (54) projects from the spacer sleeve (70) and the annular element (110) are dimensioned such that the forward end of the threaded portion (58) reaches the bore section (112) of the annular element (110) before the spacer sleeve (70) comes to rest on the annular element (110).

7. The screw fastener device of claim 6, characterized in that the annular element (110) is floatingly attached to the adjacent side of the second member (52).

8. The screw fastener device of claim 7, characterized in that the annular element (110) comprises a locking means (118,120,124) or the like to be secured at least to a further bore (98,100) of the second member (52).

9. The screw fastener device of claim 8, characterized in that at least a pair of preferably diametrically opposed spring legs (120,124) is formed on the annular element (110), said legs having a forward portion including a resilient undercut (126,128) to be placed through corresponding bores (98,100) of the second member (52) so that the undercut rests on the other face of the second member (52) when the resilient undercut (126,128) has been inserted in the corresponding bore.

10. The screw fastener device of claim 8 or 9, characterized in that the locking means engages at least an opening (94,96) of the first nut (88) to secure the nut to the second member (52).

11. The screw fastener device of claims 8 to 10, characterized in that the locking means is formed of sheet metal or plastic material.

12. The screw fastener device of claim 11, characterized in that the locking means made of plastic material is injection molded to the annular element (110).

13. The screw fastener device of one of claims 8 to 10, characterized in that the locking means made of sheet metal is held by friction on the periphery of the annular element.

14. The screw fastener device of claim 13, characterized in that the periphery of the annular element (110) is provided with a serration (116) extending parallel to the axes.

15. The screw fastener device of one of claims 10 to 14, characterized in that the first nut (88) comprises a pair of diametrically opposed projections (90,92) each including a bore (94,98).

## Revendications

1. Assemblage à vis de deux composants distants, en particulier de tôles, à l'aide d'une vis dont la tête est appliquée contre le côté extérieur de l'un des composants, ainsi que d'un premier écrou qui vient en appui contre le côté extérieur du second composant et d'un manchon d'entretoisement placé sur la tige de la vis entre les composants, caractérisé en ce que le manchon d'entretoisement (30) comporte un filetage (32) et peut se visser dans un second écrou (44) qui est placé sur le côté du premier composant (10) qui est à l'opposé de celui de la tête (16) de la vis, la vis (14) comporte une partie antérieure filetée (22) dont le diamètre extérieur est supérieur au diamètre de la partie non taraudée (24) de la vis qui se prolonge jusqu'à la tête (16), le manchon d'entretoisement (30) comporte un tronçon de taraudage (34) dont le diamètre intérieur ou diamètre de l'âme est égal ou supérieur au diamètre de la partie non filetée de la tige, la partie taraudée (34) du manchon d'entretoisement est mise en prise sous contrainte, avant le processus de vissage, avec la partie filetée (22) de la vis (14) de manière que le manchon d'entretoisement (30) puisse être vissé avec un couple suffisant dans le second écrou (44) de façon que cette prise se libère néanmoins lorsque le manchon d'entretoisement (30) vient en appui contre le second composant et lorsqu'un couple de rotation plus élevé est exercé, afin que la partie filetée (22) de la tige puisse être vissée dans le premier écrou (48).

2. Assemblage à vis selon la revendication 1, caractérisé en ce que les parties (34, 22) du manchon d'entretoisement (30) et de la vis (14) qui comportent des filets de vis sont reliées par collage, de préférence par micro-encapsulage (28).

3. Assemblage à vis selon la revendication 1 ou 2, caractérisé en ce que le second écrou (44) est soudé sur le côté intérieur du premier composant (10).

4. Assemblage à vis selon l'une des revendications 1 à 3, caractérisé en ce que le premier écrou (48) est disposé dans une cage (46).

5. Assemblage à vis selon l'une des revendications 1 à 4, caractérisé en ce que la vis (14), sur la partie non filetée (24) de la tige où sont placés le manchon d'entretoisement (30) et une rondelle (26), est préfabriquée avec ceux-ci de manière à constituer un module.

6. Assemblage à vis selon l'une des revendications 1 à 6, caractérisé en ce qu'un élément annulaire (110) disposé entre le second écrou (84) et le second composant (52) comporte un trou de traversée ayant une partie (112) qui a un diamètre légèrement plus grand que le diamètre extérieur de la partie antérieure filetée (58) de la vis (54), ainsi qu'une partie conique (114) qui s'élargit vers le second écrou (84), en ce que le trou (82) du second composant (52) est plus grand que le diamètre de la tige de la vis et notamment de sa partie filetée (58) et en ce que la partie filetée (58) de la vis (54) est saillante à l'extérieur du manchon d'entretoisement (70) et l'élément annulaire (110) est dimensionné de manière telle que l'extrémité antérieure de cette partie filetée (58) atteigne la partie (112) du trou de l'élément annulaire (110) avant que le manchon d'entretoisement (70) n'entre en appui contre l'élément annulaire (110).

7. Assemblage à vis selon la revendication 6, caractérisé en ce que l'élément annulaire (110) peut se placer de manière qu'il soit flottant contre le côté du second composant (32) qui est tourné vers lui.

8. Assemblage à vis selon la revendication 7, caractérisé en ce qu'une agrafe élastique (118, 120, 124) ou analogue prévue sur l'élément annulaire (110) peut se verrouiller dans au moins un autre trou (98, 100) du second composant (52).

9. Assemblage à vis selon la revendication 8, caractérisé en ce qu'au moins deux jambages élastiques de préférence diamétralement opposés (120, 124) sont placés sur l'élément annulaire (110) et une partie de ceux-ci qui est à l'avant et qui comporte une contre-dépouille élastique (126, 128) peut être introduite dans un trou correspondant (98, 100) du second composant (52) de manière que la contre-dépouille entre en appui contre l'autre côté du second composant (52) lorsque la contre-dépouille élastique (126, 128) a été enfilée dans le trou correspondant.

10. Assemblage à vis selon la revendication 8 ou 9, caractérisé en ce que l'agrafe élastique pénètre aussi dans au moins un trou (94, 96) du premier écrou (88) afin de retenir celui-ci contre le second composant (52).

11. Assemblage à vis selon l'une des revendications 8 à 10, caractérisé en ce que l'agrafe élastique est en tôle ou en matière plastique.

12. Assemblage à vis selon la revendication 11, caractérisé en ce que l'agrafe élastique en matière plastique est rapportée par injection sur l'élément annulaire (110).

13. Assemblage à vis selon l'une des revendications 8 à 10, caractérisé en ce que l'agrafe élastique en tôle est tenue par friction sur la circonférence de l'élément annulaire.

14. Assemblage à vis selon la revendication 13, caractérisé en ce que la circonférence de l'élément annulaire (110) comporte une rainurage parallèle à l'axe (116).

15. Assemblage à vis selon l'une des revendications 10 à 14, caractérisé en ce que premier écrou (88) comporte deux prolongements diamétralement opposés (90, 92) dans chacun desquels un trou (94, 98) est réalisé.
